# EUROPEAN PATENT SPECIFICATION

(11) **EP 2 852 856 B1**
(45) Date of publication and mention of the grant of the patent: **11.07.2018**
(21) Application number: 13729137.3
(22) Date of filing: 21.05.2013
(51) Int. Cl.: G02B 6/38, H01R 13/633

(54) **SECURE SC OPTICAL FIBER CONNECTOR AND REMOVAL TOOLS**
SICHERER SC-GLASFASERSTECKER UND ENTNAHMEWERKZEUGE
CONNECTEUR DE FIBRE OPTIQUE SC SÛR ET OUTILS DE RETRAIT

(30) Priority: 21.05.2012 US 201261649867 P; 08.04.2013 US 201361809872 P
(43) Date of publication of application: 01.04.2015
(73) Proprietor: Advanced Fiber Products, LLC, Des Plaines, IL 60018 (US); Durrant, Richard C. E., Crystal Lake, IL 60012 (US); Adams, Darren J.M., Haverhill, Suffolk CB9 0LH (GB)
(72) Inventor: DURRANT, Richard, C., E., Crystal Lake, IL 60012 (US); ADAMS, Darren, J., M., Haverhill Suffolk CB9 0LH (GB)
(74) Representative: Hofstetter, Schurack & Partner
(86) International application number: PCT/US2013/042121
(87) International publication number: WO 2013/177234

(56) References cited:
- US-A1- 2007 207 667
- US-A1- 2011 058 774
- US-A1- 2011 317 976
- US-B1- 6 357 934
- US-B1- 7 892 012

## Description

### BACKGROUND OF THE INVENTION

### Field of the Invention

The present invention relates generally to optical fiber connectors, and more particularly, to secure SC connectors that can only be disconnected with specific removal tools.

### Description of Related Art

Optical fiber connectors are commonly used in both civilian and military applications. In both of these applications, security is an issue. Not only is it important to properly connect the correct optical fiber connector plug to the correct corresponding optical fiber connector, it also is important to prevent a connected optical fiber connector plug from being removed by an unauthorized user. Furthermore, it is important to prevent an optical fiber connector port from being accessed by an unauthorized user.

Additionally, it is very common for optical fiber connector plugs to get caught or snagged on surrounding optical fiber cables, other optical fiber connector plugs, and edges and corners of cable trays, conduits and the like when optical fiber cables having optical fiber connector plugs are being installed or removed.

US 2007/207667 A1 discloses an optical fiber connector plug as described in the preamble of claim 1.

Accordingly, there is a need to provide an optical fiber connector plug and optical fiber connector that facilitates optical fiber connector plugs being connected to correct corresponding optical fiber connectors. Furthermore, there also is a need to provide an optical fiber connector plug that cannot be disconnected by unauthorized user. Moreover, there is a need for an optical fiber connector plug that does not get caught and snagged when the attached optical fiber cable is being pulled around edges and corners during installation or on retrieval.

### ASPECTS AND SUMMARY OF THE PRESENT INVENTION

The invention is directed to an optical fiber connector plug comprising the features of claim 1. One aspect of the present invention is to provide an optical fiber connector plug that includes an anti-snag guide to prevent the optical fiber connector plug or connector from being caught on corners and edges when the attached cable is being pulled around corners and edges during installation and removal.

Another aspect of the present invention is to provide optical fiber connector plugs or connectors that can only be disconnected with specific keyed removal tools. The optical fiber connectors or plugs have different color coded features on the connector body such as an anti-snag feature, to identify their keyway, and only a removal tool having the same color and mechanically matched keyway can unlock and remove an optical fiber connector plug having the same color anti-snag guide.

The present invention provides an unlocking and release tool for an optical fiber SC connector. A standard SC connector typically has an outer shroud that pulls or slides back to release the latch arms in the coupling adaptor/receptacle to release the plug. It's a push-pull design with an inner body component and a sliding outer release shroud. The present invention is a single body that eliminates the outer shroud that an operator normally pulls back. Additionally, the present invention is designed to restrict physical access, tampering, or insertion of any objects or unauthorized tools to force de-latching. Accordingly, when a Secure SC connector is plugged in, there is no access to lift the latch arms in the coupling adaptor to disconnect it.

The present invention enables the optical fiber connector plug to be unlocked and removed by providing multiple slots passing through the back plate of the optical fiber connector plug, allowing corresponding matching prongs, wherein at least one prong can be a different width or shape, of the release tool to protrude under the latch arms in the receiving or coupling adapter when inserted. The design is compatible with industry standard SC interfaces.

The present invention provides an unlocking and release tool for an optical fiber SC connector. A standard SC connector typically has a blue, green or beige outer shroud that pulls or slides back to release the latch arms in the coupling adaptor/receptacle to release the plug. It's a push-pull design with an inner body component and a sliding outer release shroud. The present invention is a single body that eliminates the outer shroud that an operator normally pulls back. Additionally, the present invention is designed to restrict physical access, tampering, or insertion of any objects or unauthorized tools to force de-latching. Accordingly, when a Secure SC connector is plugged in, there is no access to lift the latch arms in the adaptor to disconnect it.

The present invention enables the Secure SC connector to be unlocked and removed by providing multiple slots passing through the back of the housing or connector body back-shell, allowing a single or multiple arms or extensions of the release tool to protrude under the latch arms when inserted. The design is compatible with industry standard SC interfaces. The present invention provides a bung or outer shell component to lock out and protect empty ports.

### BRIEF DESCRIPTION OF THE DRAWINGS

FIG. 1 is a perspective view of an optical fiber connector plug configured in accordance with the present invention;
FIG. 2a is a front view of the optical fiber connector plug shown in FIG. 1;
FIG. 2b is a bottom view of the optical fiber connector plug shown in FIG. 1;
FIG. 2c is a side view of the optical fiber connector plug shown in FIG. 1;
FIG. 2d is a top view of the optical fiber connector plug shown in FIG. 1;
FIG. 2e is a back view of the optical fiber connector plug shown in FIG. 1;
FIG. 3 is a perspective view of the optical fiber connector plug of FIG. 1 connected to a coupling adapter;
FIG. 4a is a front view of the optical fiber connector plug and coupling adapter shown in FIG. 3;
FIG. 4b is a bottom view of the optical fiber connector plug and coupling adapter shown in FIG. 3;
FIG. 4c is a side view of the optical fiber connector plug and coupling adapter shown in FIG. 3;
FIG. 4d is a top view of the optical fiber connector plug and coupling adapter shown in FIG. 3;
FIG. 4e is a back view of the optical fiber connector plug and coupling adapter shown in FIG. 3;
FIG. 5 is a perspective view of a removal tool configured in accordance with the present invention;
FIG. 6 is another perspective view of the removal tool shown in FIG. 5;
FIG. 7a is a front view of the removal tool shown in FIGS. 5 and 6;
FIG. 7b is a bottom view of the removal tool shown in FIGS. 5 and 6;
FIG. 7c is a side view of the removal tool shown in FIGS. 5 and 6;
FIG. 7d is a top view of the removal tool shown in FIGS. 5 and 6;
FIG. 7e is a back view of the removal tool shown in FIGS. 5 and 6;
FIG. 8 is a side view of a prong of the removal tool shown in FIGS. 5 and 6;
FIG. 9 is a perspective view of the removal tool of FIGS. 5 and 6 attached to the optical fiber connector plug shown in FIG. 1;
FIG. 10 is a perspective view of the removal tool and optical fiber connector plug shown in FIG. 9 connected to the coupling adapter shown in FIG. 3;
FIG. 11a is a front view of removal tool, optical fiber connector plug, and coupling adapter shown in FIG. 10;
FIG. 11b is a bottom view of the removal tool, optical fiber connector plug, and coupling adapter shown in FIG. 10;
FIG. 11c is a side view of the removal tool, optical fiber connector plug, and coupling adapter shown in FIG. 10;
FIG. 11d is a top view of the removal tool, optical fiber connector plug, and coupling adapter shown in FIG. 10;
FIG. 11e is a back view of the removal tool, optical fiber connector plug, and coupling adapter shown in FIG. 10;
FIG. 12 is a cross-sectional view of the removal tool, optical fiber connector plug, and coupling adapter shown in FIG. 10 and FIGS. 11a-11e;
FIG. 13 is an enlarged section of the cross-sectional view shown in FIG. 12;
FIG. 14a is a front view of the optical fiber connector plug housing shown in FIG. 1;
FIG. 14b is a bottom view of the optical fiber connector plug housing shown in FIG. 1;
FIG. 14c is a side view of the optical fiber connector plug housing shown in FIG. 1;
FIG. 14d is a top view of the optical fiber connector plug housing shown in FIG. 1;
FIG. 14e is a back view of the optical fiber connector plug housing shown in FIG. 1;
FIG. 15 is a perspective view of the anti-snag guide shown in FIG. 1;
FIG. 16a is a front view of the anti-snag guide shown in FIG. 1;
FIG. 16b is a bottom view of the anti-snag guide shown in FIG. 1;
FIG. 16c is a side view of the anti-snag guide shown in FIG. 1;
FIG. 16d is a top view of the anti-snag guide shown in FIG. 1;
FIG. 16e is a back view of the anti-snag guide shown in FIG. 1;
FIG. 17 is a perspective view of a bung located within the optical fiber connector plug housing shown in FIGS. 14a-e;
FIG. 18 is a perspective view of the bung shown in FIG. 17;
FIG. 19a is a front view of the bung shown in FIG. 18;
FIG. 19b is a bottom view of the bung shown in FIG. 18;
FIG. 19c is a side view of the bung shown in FIG. 18;
FIG. 19d is a top view of the bung shown in FIG. 18;
FIG. 19e is a back view of the bung shown in FIG. 18; and
FIG. 20 is an SC patch panel array illustrating bungs and optical fiber connector plugs of the present invention connected therein.

### DETAILED DESCRIPTION OF THE PREFERRED EMBODIMENTS

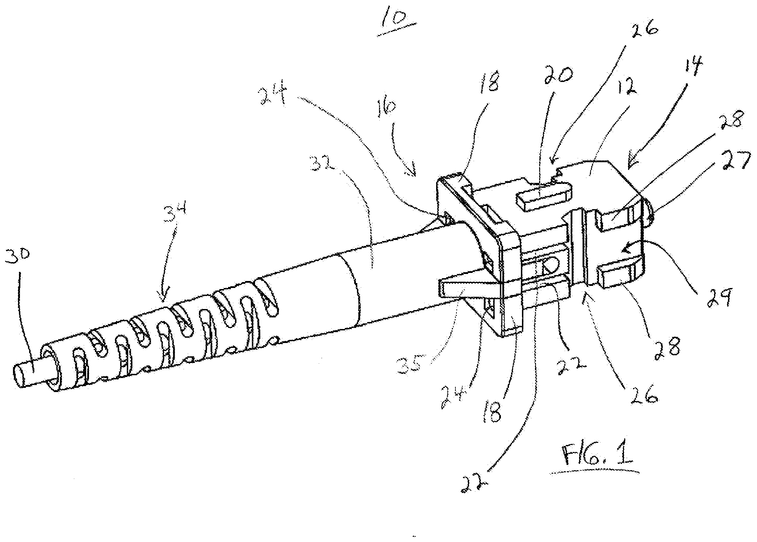

Referring now to the drawings, FIG. 1 illustrates an optical fiber connector plug 10 configured in accordance with the present invention. The optical fiber connector plug 10 includes a housing 12 having a front 14 and a back 16. The housing 12 includes a back plate, panel, back shell, or shield 18. A keying peg 20 is attached to the top of the housing 12. Guides, slots, channels, or groves 22 are included within the housing 12 for receiving and guiding prongs of a release tool. Apertures 24 within the back plate 18 are adjacent to the grooves or guide 22. When prongs of a release tool are inserted through the apertures 24 in the back plate 18, the prongs are received by and slide into a guide 22 behind each of the apertures 24.

Notches 26 are located within the side of the housing 12 for receiving a locking mechanism, such as a latch arm. Side rails 28 also are included are the sides of the housing 12 forming a slot or groove 29 for guiding the optical fiber connector plug 10 into a coupling adapter. An optical ferrule 27 is contained within the housing 12 and exits the front 14 of the housing 12.

A boot 32 containing an optical fiber is connected to the back plate, back panel, or shield 18 of the housing 12. The optical fiber cable 30 containing the optical ferrule 27 is contained within the boot 32. A plurality of notches 34 are located within a rear portion of the boot 32 for increased flexibility and strain relief. The optical fiber connector plug 10 is preferably constructed of a polymer, such as plastic.

In accordance with the present invention, anti-snag guides 35 are connected to the back plate 18 and the boot 32. The anti-snag guide 35 forms a ramp between the boot 32 and the top or edge of the back plate 18. The anti-snag guide 35 is preferably constructed of plastic to form a ramp that is fitted onto the back plate 18 of the housing or connector body 12. The ramp configuration of the anti-snag guide 35 helps to prevent the back plate 18 of the housing 12 of the optical fiber connector plug 10 from getting caught on edges and corners while the optical fiber connector plug 10 is being pulled by the optical fiber cable 30 during installation or removal of the optical fiber connector plug 10.

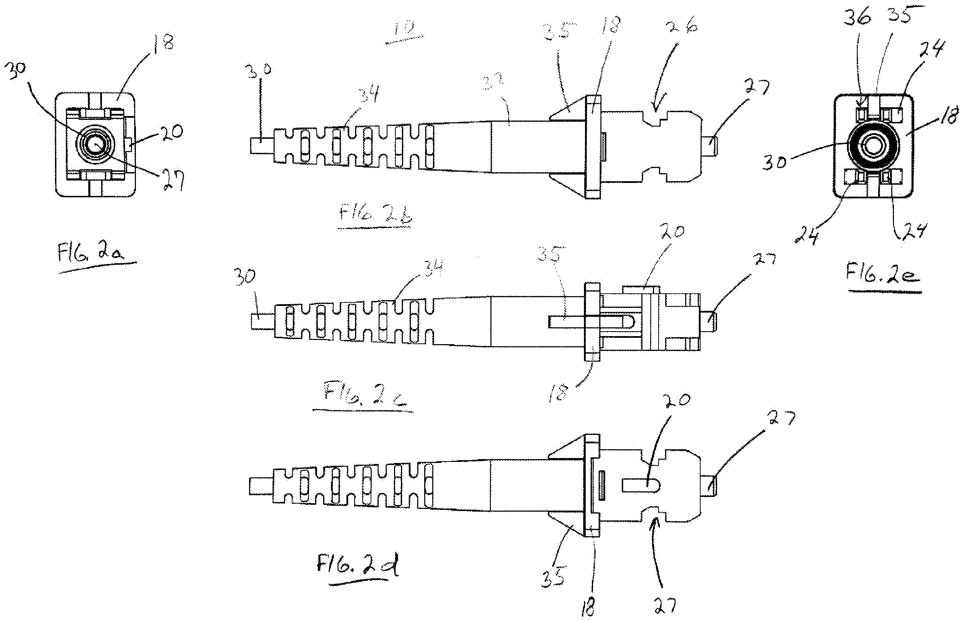

FIGS. 2a - 2e illustrate different views of the optical fiber connector plug 10 shown in FIG. 1. FIG. 2a shows the front 14 of the optical fiber connector plug 10 having an optical fiber cable 30 containing an optical fiber within a ferrule 27.

FIGS. 2b-d illustrate the bottom, side, and top of the optical fiber connector plug 10, respectively. FIG. 2e illustrates the back 16 of the optical fiber connector plug 10 and the optical fiber cable 30.

In accordance with a further aspect of the present invention, FIG. 2e illustrates the plurality of apertures 24, wherein at least one aperture 36 of the plurality of apertures 24 has a different size, shape, and configuration of the other apertures 24. The different configuration of aperture 36 provides a unique key configuration for prongs of a removal tool, thereby creating a unique key configuration. The position of the apertures 24 can be changed to create additional lock or key combinations, requiring a different removal tool with the correct matching prongs. Furthermore, the apertures 24 can be different in number, such as 2, 3, 4, 5, or 6, and different shapes, such as round, square, rectangle, star, or triangle.

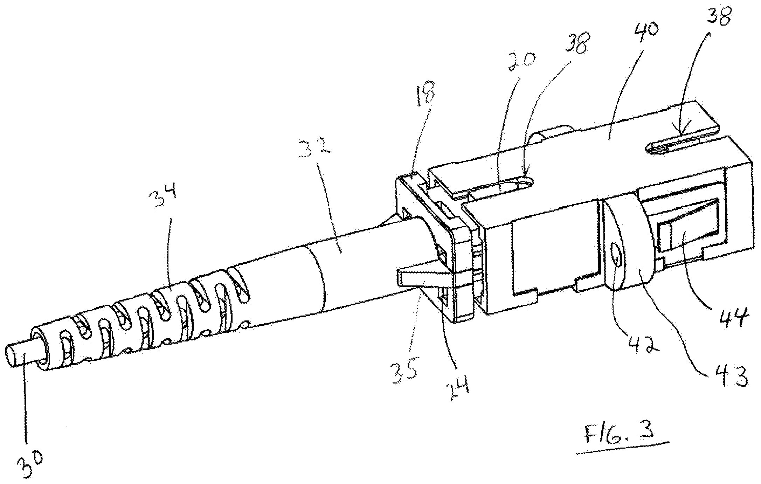

FIG. 3 is a perspective view of the optical fiber connector plug 10 located within and connected to an optical fiber connecting receptacle or coupling adapter 40 in accordance with the present invention. The coupling adapter 40 includes a guide slot or groove 38 for receiving the keying peg 20 on the housing 12 of the optical fiber connector plug 10 so as to correctly position and orientate the optical fiber connector plug 10 within the coupling adapter 40. The coupling adapter 40 also includes a mounting bracket 43 having apertures 42 on opposing sides of the coupling adapter 40. The coupling adapter 40 is preferably constructed of plastic. Flexible metal tabs 44 also are included on opposing sides of the coupling adapter 40 for securing the coupling adapter 40 within a panel array or other mounting platform and discharging static charges.

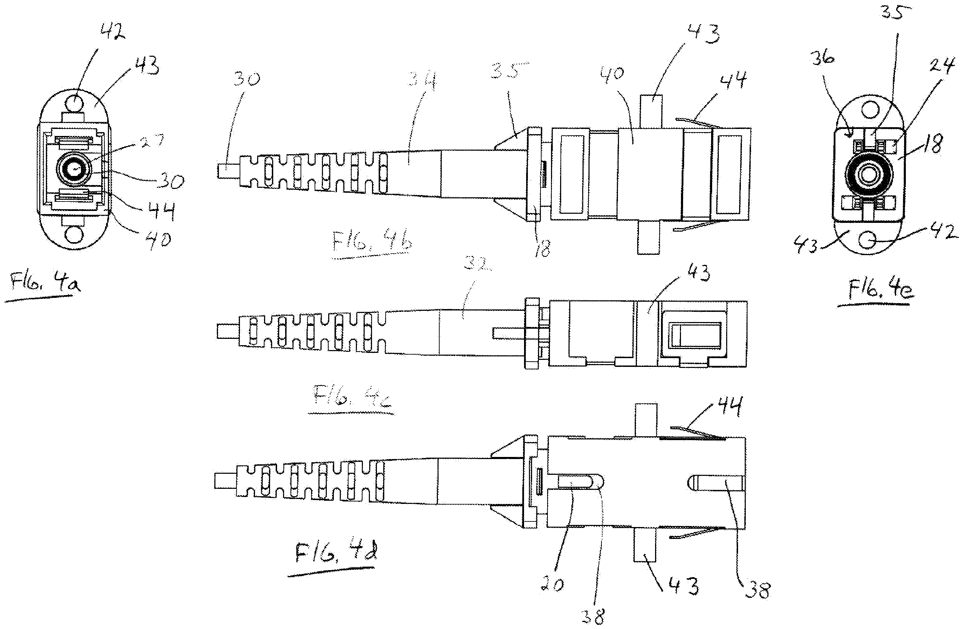

FIGS. 4a-4e illustrate different views of the optical fiber connector plug 10 connected to and within the coupling adapter 40. FIG. 4a is a front view of the optical fiber connector plug 10 and the coupling adapter 40 showing an optical fiber in the optical ferrule 27 within the optical fiber cable 30. Also illustrated are the bracket 43, aperture 42, and flexible tabs 44 of the coupling adapter 40. FIGS. 4b-4d illustrate the bottom, side, and top of the optical fiber connector plug 10 connected to the coupling adapter 40, respectively. FIGS. 4e illustrates the back of the optical fiber connector plug 10 within the coupling adapter 40 showing the apertures 24, back plate 18, anti-snag guide 35, and mounting holes or apertures 42 of mounting bracket 43. The aperture 36 in the back plate 18 having a unique configuration from the other apertures 24 also is illustrated.

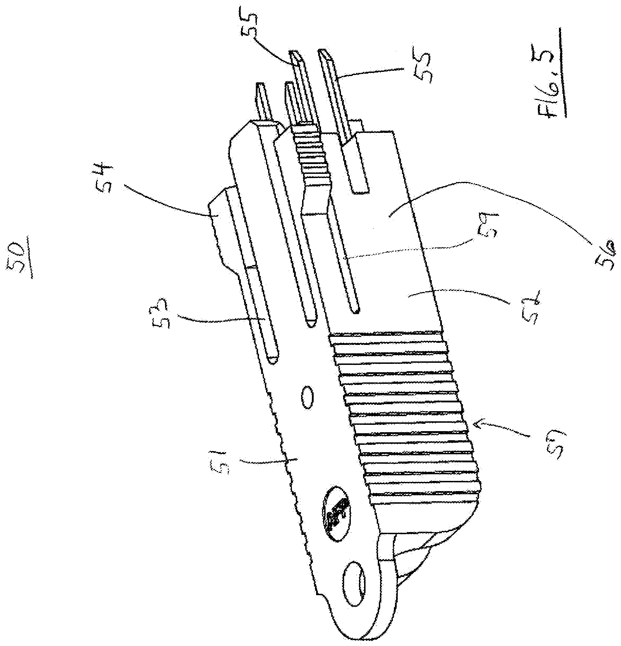

FIG. 5 is a perspective view of a removal tool 50 configured in accordance with the present invention. In accordance with another aspect of the present invention, the removal tool 50 includes a plurality of prongs 55 extending longitudinally or parallel with the length of the body 52 of the removal tool 50. Flexible handles 54, formed by slots 53 in the top 51 and slots 59 on opposing sides 56 of the body 52 of the removal tool 50, are provided to move inward when grasped by a user, and clasp the optical fiber connector plug 10 for removal. Ridges are includes on the sides 56 of the body 52 of the removal tool 50 for better gripping of the removal tool 50 when removing an optical fiber connector plug 10 using the removal tool 50.

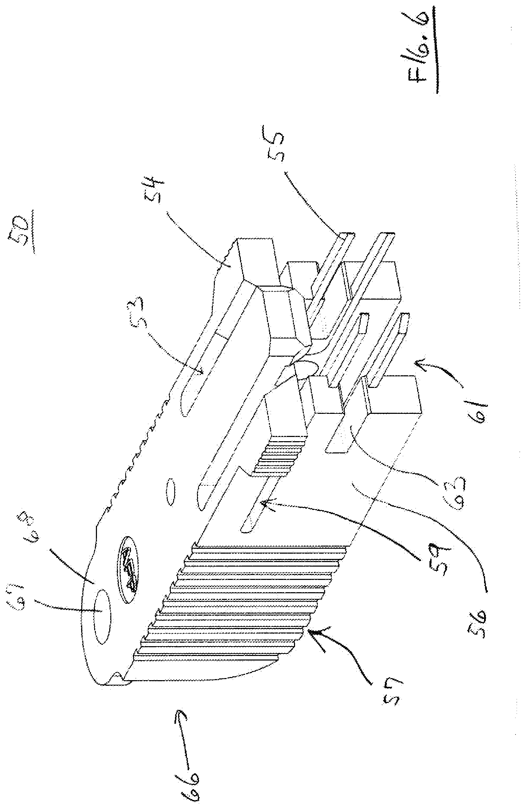

FIG. 6 is a perspective view of the removal tool 50 shown in FIG. 5 from a different angle and showing the prongs 55 at the front 61 of the removal tool 50. Prongs 55 are preferably constructed of metal and extend parallel to one another. The prongs 55 are sized and positioned to be inserted into the apertures 24 of the back plate 18 of the optical fiber connector plug 10. Slots 63 on the sides 56 of the removal tool are positioned and sized to receive the anti-snag guide 35 of the optical fiber connector plug 10.

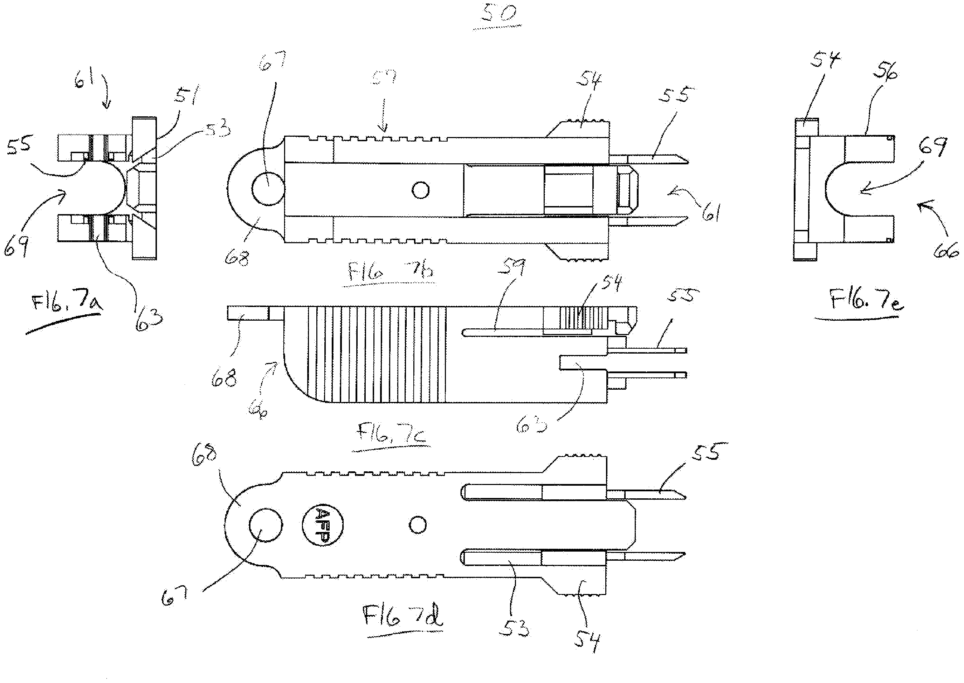

FIG. 7a is a front 61 view of the removal tool 50 showing the prongs 55. Also shown are the slots 53 is the top 51 of the removal tool 50 and slots 63 on the sides 56 of the removal tool 50. A cavity 69 is formed within the removal tool 50 by the top 51 and sides 56. The cavity 69 is sized and configured for receiving and covering the optical fiber connector plug 10 during the removal of the optical fiber connector plug 10 from the coupling adapter 40.

FIGS. 7b-d are a bottom view, a side view, and a top view, respectively, of the removal tool 50 shown in FIGS. 5 and 6. FIG. 7e is a view of the rear 66 of the removal tool 50 showing the handles 54 and cavity 69.

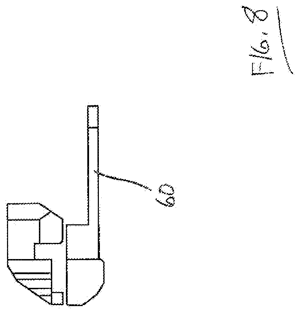

In accordance with a further aspect of the present invention, FIG. 8 illustrates a side view of a uniquely sized and shape prong 60 relative to the other prongs 55 on the removal tool 50. In the embodiment shown in FIG. 8, prong 60 is narrower in width than the other prongs 55 of the removal tool 50. Of course, in other embodiments the different prong could be wider in width than other prongs 55, or even a different cross sectional configuration.

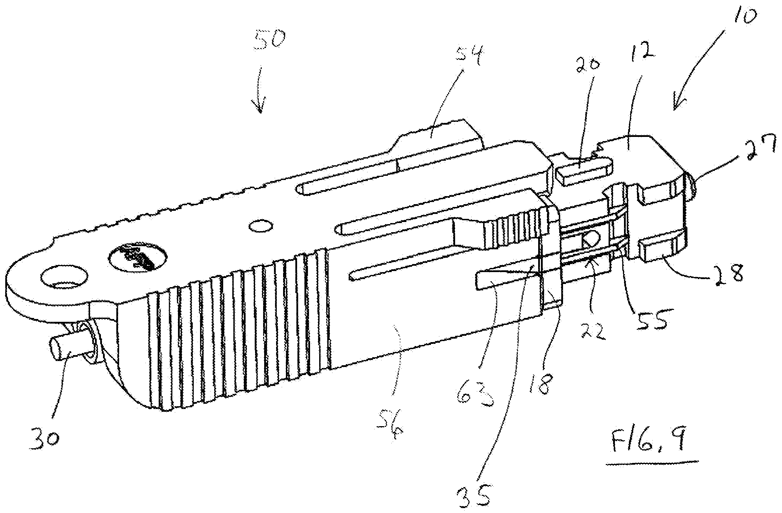

FIG. 9 is a perspective view of the removal tool 50 located over the optical fiber connector plug 10 in accordance with the present invention. The prongs 55 are shown located within the guides 22 of the housing 12 of the optical fiber connector plug 10. The anti-snag guide 35 is shown located within the slot 63 on the side 56 of the removal tool 50.

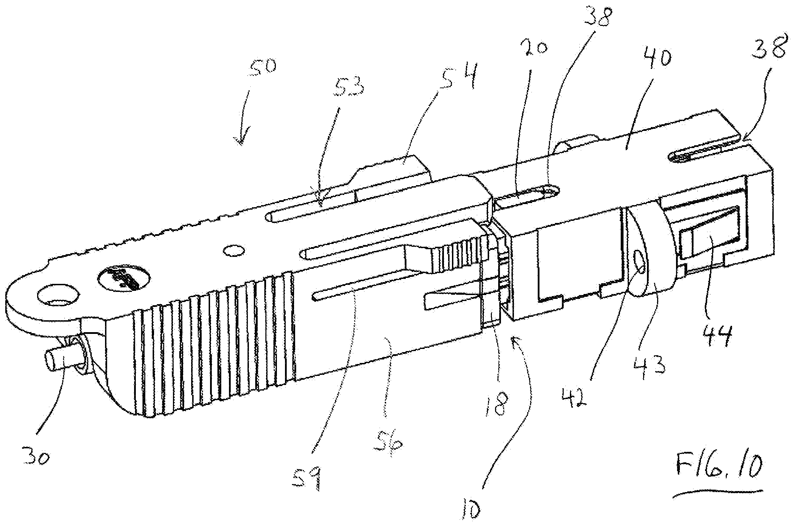

FIG.10 is a perspective view of the removal tool 50 located over the optical fiber connector plug 10 as shown in FIG. 9, wherein the optical fiber connector plug 10 is located within the coupling adapter 40. The keying peg 20 of the optical fiber connector plug 10 is shown within the guide slot 38 of the coupling adapter 40 to properly position the optical fiber connector plug 10 within the coupling adapter 40.

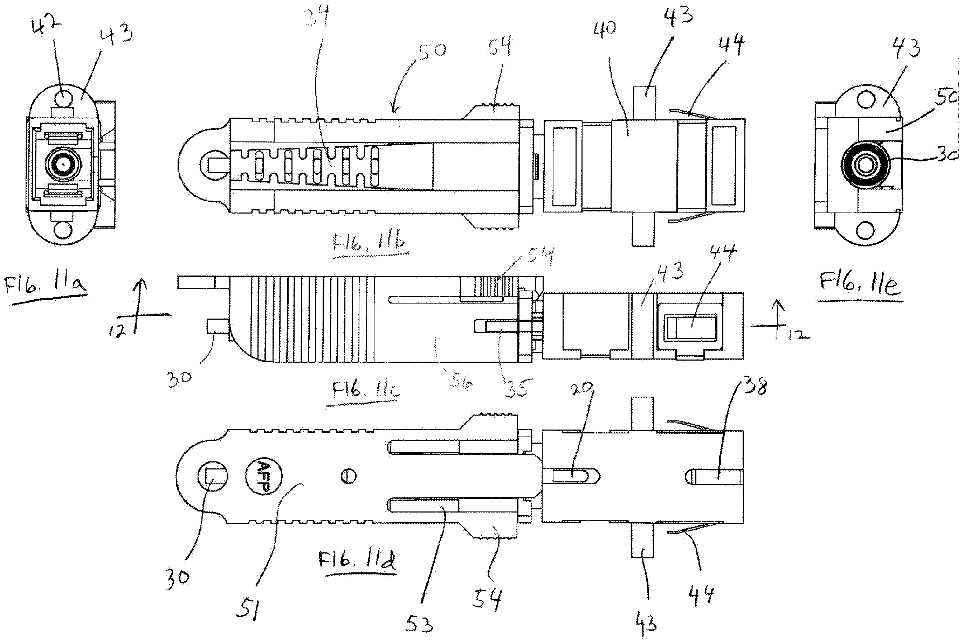

FIG. 11a is a front view of the coupling adapter 40 and the optical fiber connector plug 10 within the coupling adapter 40 as shown in FIG. 10. FIGS. 11b-11d are a bottom view, side view, and top view of the removal tool 50, optical fiber connector plug 10, and coupling adapter 40 as shown in FIG. 10. FIG. 11e is a rear view of the removal tool 50 and optical fiber connector plug 10 shown in FIG. 10.

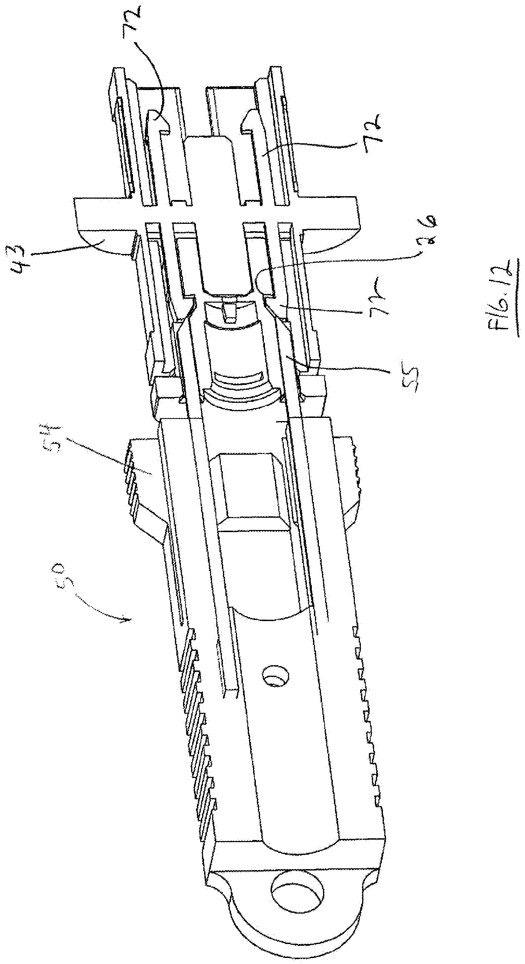

FIG. 12 is a cross-section view of the removal tool 50, optical fiber connector plug 10, and coupling adapter 40 shown in FIGS. 10 and 11a-e, and taken along line 12-12 of FIG. 11c. In accordance with the present invention, the prongs 55 of the removal tool 50 are illustrated being within the guides 22 of the housing 12 of the optical fiber connector plug 10. As the prongs 55 are fully inserted within the apertures 24 of the optical fiber connector plug 10 and passing though to the coupling adapter 40, the prongs 55 slide under latch arms 72 of the coupling adapter 40 to move the latch arms 72 out of and away from the notches 26 of the housing 12 of the optical fiber connector plug 10 to release the optical fiber connector plug 10 from the coupling adapter 40. As shown in FIG. 12, the optical fiber connector plug 10 is secured within coupling adapter 40 by the latch arms 72 fitting into the notches 26 of the optical fiber connector plug 10.

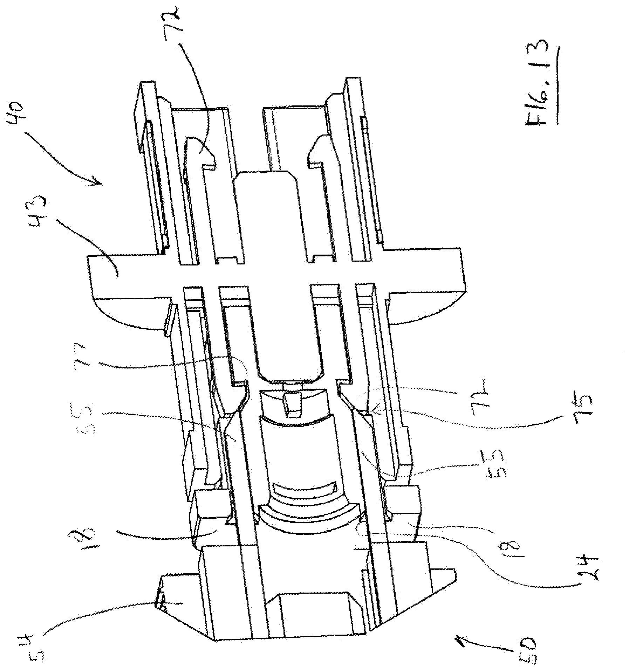

FIG. 13 is an enlarged view of a portion of the cross-section view shown in FIG. 12. Illustrated are a portion of the removal tool 50, optical fiber connector plug 10, and coupling adapter 40. As can be seen in more detail, the latch arms 72 of the coupling adapter 40 fit into the notches 26 in order to secure the optical fiber connector plug 10 within the coupling adapter 40. When the prongs 55 are inserted all the way into the apertures 24, the pointed end of the prongs 55 slide under the hooked portion 77 of the latch arms 72 to lift the latches 72 out of and away from the notches 26, thus releasing the optical fiber connector plug 10 from the coupling adapter 40, and enabling the optical fiber connector plug 10 to be removed from the coupling adapter 40.

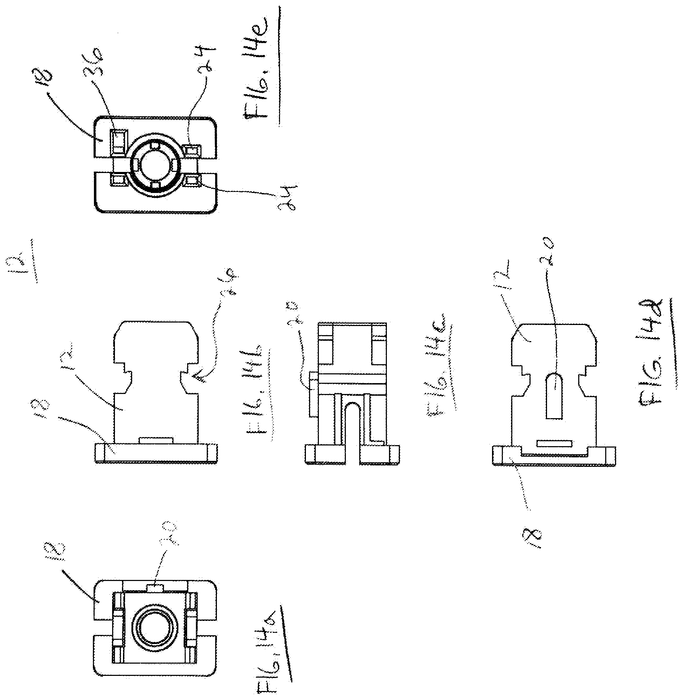

FIG. 14a is a front view of the housing 12 of the optical fiber connector plug 10 without the fiber cable 30 and inner connector components. FIGS. 14b-d are bottom, side and top views, respectively, of the housing 12 of the optical fiber connector plug 10 without the fiber cable 30 and inner connector components. FIG. 14e is a rear view of the housing 12 without the fiber cable 30 and inner connector components, such as a metal body, spring and ferrule.

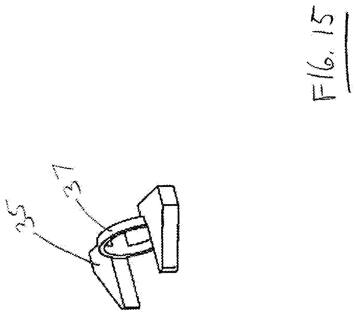

FIG. 15 is a perspective view of the anti-snag guide 35 shown in FIG. 1. The anti-snag guides 35 are connected together by a mounting ring 37. The anti-snag guides 35 and mounting ring 37 are preferably a unitary piece constructed of plastic.

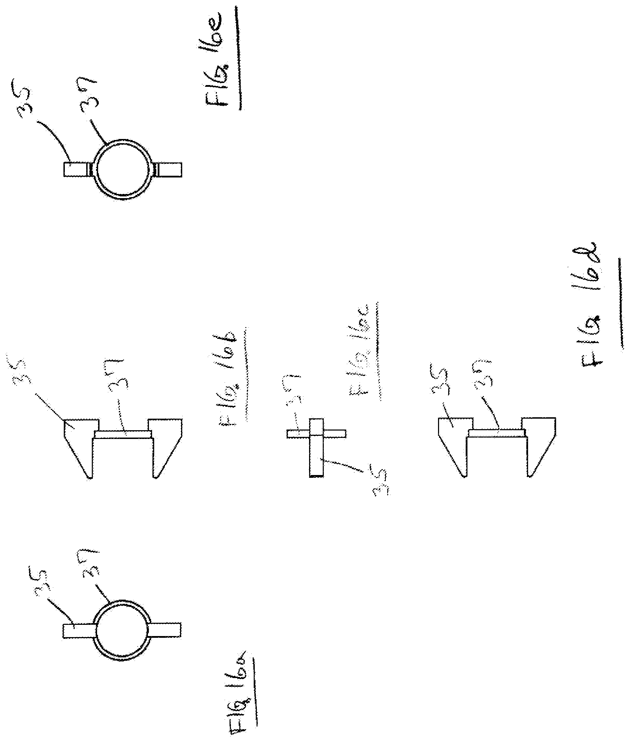

FIG. 16a is a front view of the anti-snag guides 35 and mounting ring 37. FIGS. 16b-16d are views of the bottom, side, and top, respectively, of the anti-snag guides 35 and mounting ring 37. FIG. 16e is a back view of the anti-snag guides 35 and mounting ring 37.

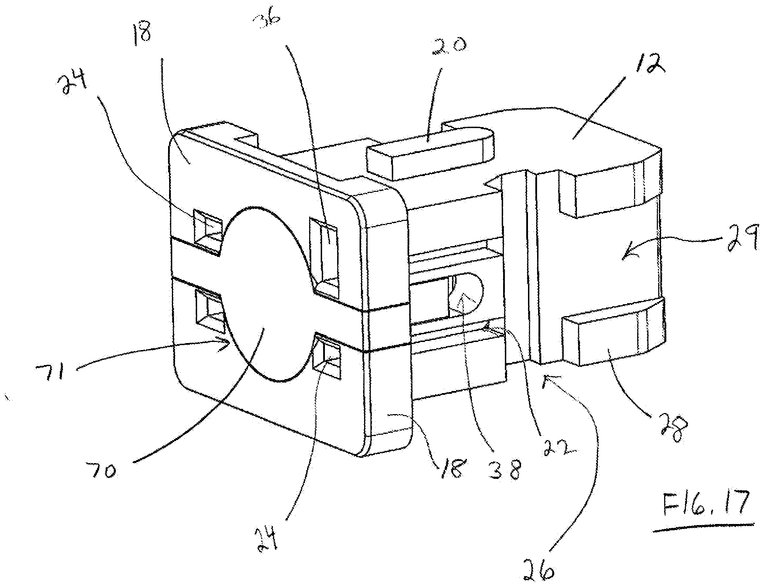

FIG. 17 is a perspective view of the housing 12 containing a bung or connector plug 70 instead of an optical fiber cable 30. The bung 70 in the housing 12 prevents unauthorized access to an optical fiber receptacle or adapter housing by an optical fiber connector plug 10. The bung 70 is fitted into the back of the optical fiber connector housing 12 to be visible at the back of the back plate 18 and block the housing port 71 in housing 12. When the bung 70 is clipped into an optical connector housing port 71, and the housing 12 is plugged into a coupling adapter or receptacle 40, this blocks the optical fiber connector port from access and can only be removed with a corresponding keyed removal tool 50.

In accordance with an additional feature of the present invention, the removal tool 50 and a plug body feature, such as the anti-snag guide 35, have similar colors to identify they are pairs and matching to identify which plugs goes into which connector. The pattern of different width apertures 24 and prongs 55 can be changed for different color optical fiber connector plugs 10 and removal tools 50 combinations.

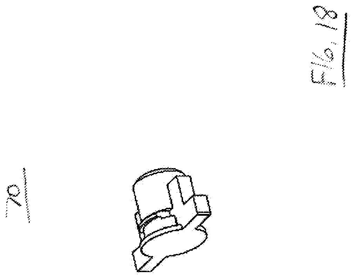

FIG. 18 is a perspective view of the bung 70 shown in FIG. 17.

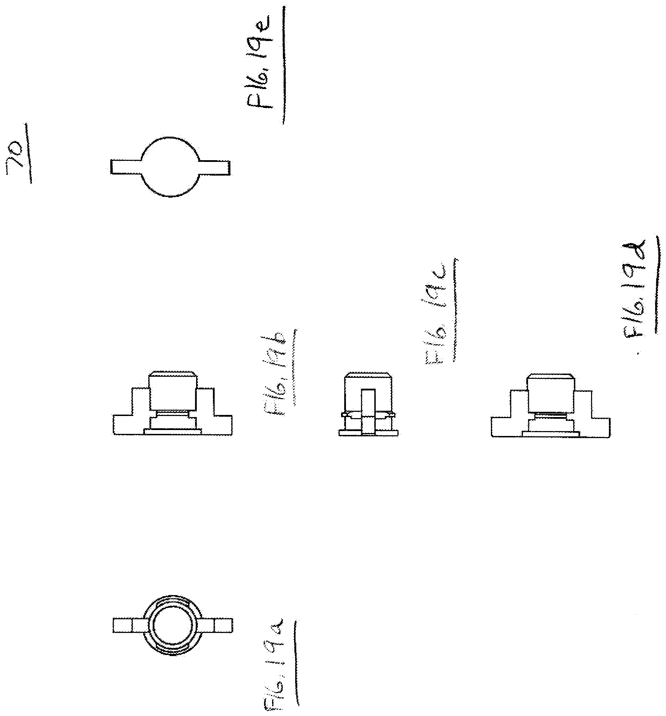

FIGS. 19a-e are different views of the bung 70 shown in FIG. 18. FIG. 19a is a front view, FIG. 19b is a bottom view, FIG. 19c is a side view, FIG. 19d is a top view, and FIG. 19e is a rear view.

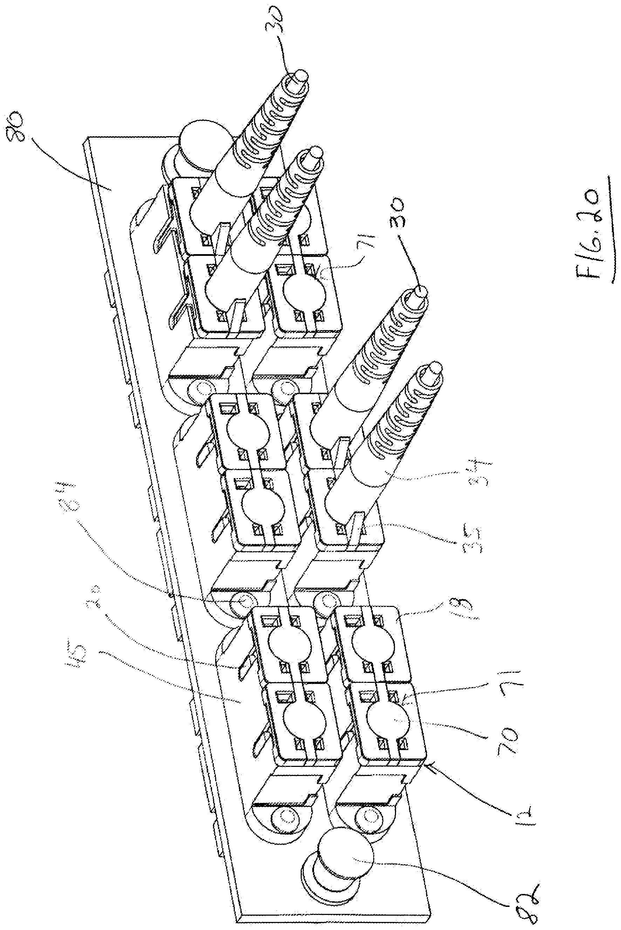

FIG. 20 is a perspective view of a panel 80 mounting a plurality of duel optical fiber connectors 45 containing housings 12 of optical fiber connector plugs 10. The panel 80 is secured to a location by a mounting plug 82. The optical fiber connector ports 71 of the housings 12 contained within the dual optical fiber connectors 45 contain either a bung 70 or an optical fiber boot 32.

## Claims

1. An optical fiber connector plug (10), comprising:
a housing (12) having a front (14) and a rear (16);
a back plate (18) connected to the rear (16) of the housing (12), said back plate (18) including a plurality of apertures (24, 36) for receiving prongs (55, 60) of a removal tool (50); and
a channel (22) adjacent to each aperture (24) for receiving a prong (55) of the removal tool (50) through an aperture (24) and guiding the direction of the prong (55) via the channel (22),
**characterized in that**
one of the apertures (36) in the back plate (18) has a different configuration than other apertures (24) in the back plate (18), thereby requiring the removal tool (50) having a prong (60) matching the different aperture (36) configuration to pass through all the apertures (24, 36) in the back panel (18).

2. The optical fiber connector plug (10) of Claim 1, further comprising:
a boot (32) for housing an optical fiber cable (30) located within an optical fiber connector port of the back panel (18) and the housing (12); and
a ramp formed between boot (32) and the back panel (18) to function as an anti-snag guide (35) on the rear (16) of the optical fiber connector plug (10).

3. The optical fiber connector plug (10) of Claim 1, further comprising:
a removal tool (50) have a plurality of prongs (55, 60) corresponding in width and shape of the plurality of apertures (24, 36) on the back panel (18) of the optical fiber connector plug (10).

4. The optical fiber connector plug (10) of Claim 3, wherein one of the prongs (60) on the removal tool (50) has a different configuration than the other apertures (24) on the back panel (18), the configuration of the prongs (55, 60) correspond to the configuration of the apertures (24, 36) on the back panel (18), thereby enabling the removal tool (50) to be keyed to that particular optical fiber connector plug (10) and enable all the prongs (55, 60) to pass through the apertures (24, 36) on the back panel (18).

5. The optical fiber connector plug (10) of Claim 1, wherein the housing (12) includes notches (26) for receiving latch arms(72) to secure the optical fiber connector plug (10) within a coupling adapter (40).

6. The optical fiber connector plug (10) of Claim 1, further comprising:
a coupling adapter (40) having an optical fiber port for receiving the housing (12) of the optical fiber connector plug (10);
latch arms (72) within the coupling adapter (40);
notches (26) within the housing (12) of the optical fiber connector plug (10) for receiving and catching the latch arms (72) of the coupling adapter (40), thereby securing the optical fiber connector plug (10) within the coupling adapter (40); and
wherein prongs (55, 60) received from a removal tool (50) via the apertures (24, 36) in the back plate (18) and along the channels (22) are inserted between the latch arms (72) and the notches (26) so as to release the optical fiber connector plug (10) from the coupling adapter (40).

## Patentansprüche

1. Lichtleitfaser-Verbindungstecker (10), der umfasst:
ein Gehäuse (12) mit einer Vorderseite (14) und einer Rückseite (16);
eine hintere Platte (18), die mit der Rückseite (16) des Gehäuses (12) verbunden ist, wobei die hintere Platte (18) eine Vielzahl von Öffnungen (24, 36) zum Aufnehmen von Zinken (55, 60) eines Entfernungswerkzeugs (50) umfasst; und
einen Kanal (22) benachbart zu jeder Öffnung (24) zum Aufnehmen einer Zinke (55) des Entfernungswerkzeugs (50) durch eine Öffnung (24) und Führen der Richtung der Zinke (55) über den Kanal (22),
**dadurch gekennzeichnet, dass**
eine der Öffnungen (36) in der hinteren Platte (18) eine andere Gestalt als andere Öffnungen (24) in der hinteren Platte (18) aufweist, wodurch angefordert wird, dass das Entfernungswerkzeug (50) eine Zinke (60) aufweist, die der anderen Gestalt der Öffnung (36) entspricht, um durch alle Öffnungen (24, 36) in der hinteren Platte (18) hindurchzutreten.

2. Lichtleitfaser-Verbindungsstecker (10) nach Anspruch 1, der ferner umfasst:
eine Muffe (32) zum Aufnehmen eines Lichtleitfaserkabels (30), das innerhalb eines Lichtleitfaser-Verbindungsanschlusses der hinteren Platte (18) und des Gehäuses (12) angeordnet ist; und
eine Rampe, die zwischen der Muffe (32) und der hinteren Platte (18) ausgebildet ist, um als Reißschutzführung (35) an der Rückseite (16) des Lichtleitfaser-Verbindungssteckers (10) zu funktionieren.

3. Lichtleitfaser-Verbindungsstecker (10) nach Anspruch 1, der ferner umfasst:
ein Entfernungswerkzeug (50) mit einer Vielzahl von Zinken (55, 60), die in Breite und Form der Vielzahl von Öffnungen (24, 36) an der hinteren Platte (18) des Lichtleitfaser-Verbindungssteckers (10) entsprechen.

4. Lichtleitfaser-Verbindungsstecker (10) nach Anspruch 3, wobei eine der Zinken (60) am Entfernungswerkzeug (50) eine andere Gestalt als die anderen Öffnungen (24) an der hinteren Platte (18) aufweist, wobei die Gestalt der Zinken (55, 60) der Gestalt der Öffnungen (24, 36) an der hinteren Platte (18) entspricht, wodurch ermöglicht wird, dass das Entfernungswerkzeug (50) auf diesen speziellen Lichtleitfaser-Verbindungsstecker (10) abgestimmt ist und ermöglicht, dass alle Zinken (55, 60) durch die Öffnungen (24, 36) an der hinteren Platte (18) hindurchtreten.

5. Lichtleitfaser-Verbindungsstecker (10) nach Anspruch 1, wobei das Gehäuse (12) Kerben (26) zum Aufnehmen von Verriegelungsarmen (72) umfasst, um den Lichtleitfaser-Verbindungsstecker (10) innerhalb eines Kopplungsadapters (40) zu befestigen.

6. Lichtleitfaser-Verbindungsstecker (10) nach Anspruch 1, der ferner umfasst:
einen Kopplungsadapter (40) mit einem Lichtleitfaseranschluss zum Aufnehmen des Gehäuses (12) des Lichtleitfaser-Verbindungssteckers (10);
Verriegelungsarme (72) innerhalb des Kopplungsadapters (40);
Kerben (26) innerhalb des Gehäuses (12) des Lichtleitfaser-Verbindungssteckers (10) zum Aufnehmen und Fassen der Verriegelungsarme (72) des Kopplungsadapters (40), wodurch der Lichtleitfaser-Verbindungsstecker (10) innerhalb des Kopplungsadapters (40) befestigt wird; und
wobei Zinken (55, 60), die von einem Entfernungswerkzeug (50) über die Öffnungen (24, 36) in der hinteren Platte (18) und entlang der Kanäle (22) aufgenommen werden, zwischen die Verriegelungsarme (72) und die Kerben (26) eingesetzt werden, um den Lichtleitfaser-Verbindungsstecker (10) vom Kopplungsadapter (40) zu lösen.

## Revendications

1. Fiche de connecteur pour fibres optiques (10), comprenant :
un boîtier (12), ayant un avant (14) et un arrière (16) ;
une plaque de fond (18), reliée à l'arrière (16) du boîtier (12), ladite plaque de fond (18) comportant une pluralité d'ouvertures (24, 36), destinée à loger des broches (55, 60) d'un outil d'extraction (50) et
un canal (22), adjacent à chaque ouverture (24), destiné à loger une broche (55) de l'outil d'extraction (50) à travers une ouverture (24) et à guider la direction de la broche (55) par l'intermédiaire du canal (22),
**caractérisé en ce que**
l'une des ouvertures (36) dans la plaque de fond (18) a une configuration différente de celle des autres ouvertures (24) dans la plaque de fond (18), exigeant par ce moyen que l'outil d'extraction (50), qui a une broche (60) qui correspond à la configuration différente de l'ouverture (36), passe à travers toutes les ouvertures (24, 36) dans le panneau de fond (18).

2. Fiche de connecteur pour fibres optiques (10) selon la revendication 1, comprenant en outre :
une gaine (32), destinée à loger un câble pour fibres optiques (30), situé dans un orifice de connecteur pour fibres optiques du panneau de fond (18) et le boîtier (12) et
une rampe, formée entre la gaine (32) et le panneau de fond (18), pour fonctionner comme un guide anti-accrochage (35), sur l'arrière (16) de la fiche de connecteur pour fibres optiques (10).

3. Fiche de connecteur pour fibres optiques (10) selon la revendication 1, comprenant en outre :
un outil d'extraction (50), ayant une pluralité de broches (55, 60), correspondant, en largeur et en forme, à la pluralité d'ouvertures (24, 36) sur le panneau de fond (18) de la fiche de connecteur pour fibres optiques (10).

4. Fiche de connecteur pour fibres optiques (10) selon la revendication 3, dans lequel l'une des broches (60) sur l'outil d'extraction (50) a une configuration différente de celle des autres ouvertures (24) sur le panneau de fond (18), la configuration des broches (55, 60) correspond à la configuration des ouvertures (24, 36) sur le panneau de fond (18), permettant par ce moyen à l'outil d'extraction (50) d'être claveté sur cette fiche de connecteur pour fibres optiques (10) particulière et permettant à toutes les broches (55, 60) de passer à travers les ouvertures (24, 36) sur le panneau de fond (18).

5. Fiche de connecteur pour fibres optiques (10) selon la revendication 1, dans lequel le boîtier (12) comporte des entailles (26), destinées à recevoir des bras de verrouillage (72), pour fixer la fiche de connecteur pour fibres optiques (10) dans un adaptateur d'accouplement (40).

6. Fiche de connecteur pour fibres optiques (10) selon la revendication 1, comprenant en outre :
un adaptateur d'accouplement (40), ayant un orifice pour fibres optiques, destiné à loger le boîtier (12) de la fiche de connecteur pour fibres optiques (10) ;
des bras de verrouillage (72) dans l'adaptateur d'accouplement (40) ;
des entailles (26) dans le boîtier (12) de la fiche de connecteur pour fibres optiques (10), destinées à loger et à saisir les bras de verrouillage (72) de l'adaptateur d'accouplement (40), fixant par ce moyen la fiche de connecteur pour fibres optiques (10) dans l'adaptateur d'accouplement (40) et
dans lequel les broches (55, 60), reçues d'un outil d'extraction (50) par l'intermédiaire des ouvertures (24, 36) dans la plaque de fond (18) et le long des canaux (22), sont insérées entre les bras de verrouillage (72) et les entailles (26), de façon à dégager la fiche de connecteur pour fibres optiques (10) de l'adaptateur d'accouplement (40).
